# EUROPEAN PATENT SPECIFICATION

(11) **EP 1 313 343 B1**
(45) Date of publication and mention of the grant of the patent: **25.08.2004**
(21) Application number: 02257152.5
(22) Date of filing: 15.10.2002
(51) Int. Cl.: H04Q 7/38

(54) **Providing a CAMEL based service to a subscriber terminal in a WIN network and vice versa**
Bereitstellung eines auf CAMEL basierenden Dienstes für ein Teilnehmerendgerät in einem WIN Netz, und umgekehrt
Fourniture d'un service basé sur CAMEL à un terminal d'abonné dans un reseau WIN, et vice versa

(30) Priority: 20.11.2001 US 996980
(43) Date of publication of application: 21.05.2003
(73) Proprietor: LUCENT TECHNOLOGIES INC., Murray Hill, New Jersey 07974-0636 (US)
(72) Inventor: Bunting, Roger L., Naperville, Illinois (US); Kidwell, Elizabeth Ann, Woodridge, Illinois (US); Unmehopa, Musa, Amersfoort 3813 ZL (NL); Grech, Michel Louis Francis, Pwesey, SN9 5AZ (GB)
(74) Representative: Sarup, David Alexander

(56) References cited:
- WO-A-99/63774
- US-A- 5 862 481
- DONG-HEE LEE ET AL: "CORBA-based Integrated Control and Management for IMT-2000 Global Roaming Service" SCHOOL OF ELECTRONIC AND ELECTRICAL ENGINEERING, KYUNGSPOOK NATIONAL UNIVERSITY, - 2000 pages 891-903, XP010376730 Taejon, Korea
- "Universal Mobile Telecommunications system (UMTS); Virtual Home Environment / Open Service Architecture (3GPP TS 23.127 version 4.2.0 Release 4)" ETSI TS 123 127, V4.2.0, June 2001 (2001-06), pages 1-19, XP002223496 Sophia Antipolis, France
- GRECH M L F ET AL: "DELIVERING SEAMLESS SERVICES IN OPEN NETWORKS USING INTELLIGENT SERVICE MEDIATION" BELL LABS TECHNOLOGY, BELL LABORATORIES, MURREY HILL, NJ, US, vol. 5, no. 3, July 2000 (2000-07), pages 186-202, XP000975491 ISSN: 1089-7089

## Description

### Field of the Invention

The present invention relates to an interface (LEM) operative to provide a CAMEL based service to a subscriber terminal in a WIN network, a method of providing a CAMEL based service to a subscriber terminal in a WIN network, an interface (LEM) operative to provide a WIN based service to a subscriber terminal in a CAMEL network, and a method of providing a WIN based service to a subscriber terminal in a CAMEL network.

### Background of the Invention

The value added service delivery mechanisms in present day circuit switched mobile networks are generally based on Intelligent Network (IN) techniques. In networks based on Global System for mobiles (GSM) or Universal Mobile Telecommunications System (UMTS) such IN type services are deployed using a standard known as Customized Application for Mobile Enhanced Logic CAMEL. In networks based on ANSI IS-41 such IN type services are deployed using a standard known as Wireless Intelligent Network WIN. The two protocols CAMEL and WIN are incompatible. This results in the fact that CAMEL Service Environment based services cannot be directly deployed in WIN based networks, and vice versa. Roaming mobile subscribers cannot be provided with the Operator Specific Services (OSS) while roaming in a network supporting an incompatible IN service protocol.

Third Generation Wireless Networks are expected to enable the Mobile Internet to become a reality, offering fast Internet access and high-speed data services to mobile subscribers. In order for Network Operators to allow for the rapid development of innovative value added applications on the scale seen in the Internet today, the wireless core network needs to be opened up for third party applications provided by independent software vendors. The Third Generation Partnership Project (3GPP) is currently working on the production of technical specifications to provide a mechanism that would permit independent software vendors a standard interface to access network capabilities traditionally available to network operators themselves. Within 3GPP, this mechanism is commonly referred to as the Open Service Access (OSA). This Open Service Access is predominantly targeted at UMTS (Universal Mobile Telecommunications Networks) networks, allowing application developers to access the feature-rich core network capabilities.

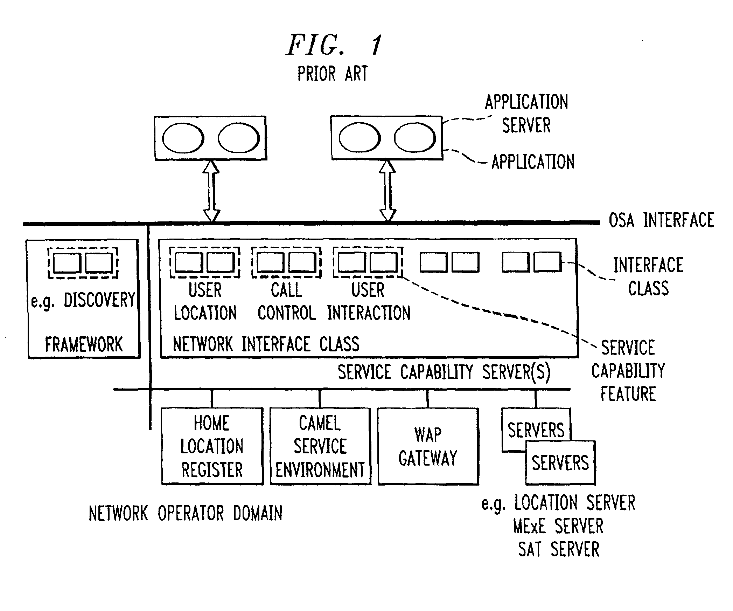

The success of new service provision and delivery platforms may depend on their ability to blend with existing technologies, offering programmability of service platform elements including network nodes, control nodes, and gateways, while in the mean time preserving the integrity of the underlying network equipment. An approach that has been demonstrated by various industry initiatives such as Parlay is to develop a set of open network Application Programming Interfaces (APIs) that offer this kind of programmability and integrity. Allowing rapid development of applications is achieved by opening up the network in such a way that application developers are not required to have extensive knowledge of the complexity of the network signalling. Telephony signalling protocols are relatively complex and the development of new services for example based on Intelligent Networks requires the skill knowledge of Intelligent Network Application Protocol (INAP) and the Transactions Capability Applications Part (TCAP). An architecture, based on the output from the Parlay Group is known within 3GPP specifications as the Open Service Access (OSA). The Open Service Access provides application developers with an abstraction of the functionality that resides within the core network. The abstraction is obtained by defining the core network functionality in terms of what is referred to as Service Capability Features (SCFs) which should be considered as technology independent building blocks that are accessible via standardized interfaces. They represent the basic functionality that is available within the network. Examples of Service Capability Features include Call Control, User Location and User Interaction and are supported in a network operator's domain through Service Capability Servers (SCS). The User Interaction Service Capability Feature can, for instance be supported on a WAP Gateway (WGW) or on the Home Location Register (HLR) while the Call Control Service Capability Feature can be supported by the CAMEL Service Environment (CSE). The applications themselves are executed on Application Servers, which may reside outside or inside the Network Operator domain. The Service Logic of the applications running on the Application Server is executed towards the Open Service Access interface, whereas the Service Capability Servers use propriety protocols to communicate with the network nodes. The Open Service Access concept is shown in Figure 1 which shows the relationship between the network nodes, service capability servers (SCS), service capability features (SCF) and the third party application servers. Open Service Access is specified by the Third Generation Project Partnership, known as 3GPP. This organisation publishes specifications based on a phased release schedule, with each release providing additional functionality. The initial 3GPP UMTS set of specifications is referred to as Release 99. Subsequent releases are referred to as Release 4 and Release 5. For each release, a set of specifications is available for Open Service Access (OSA).

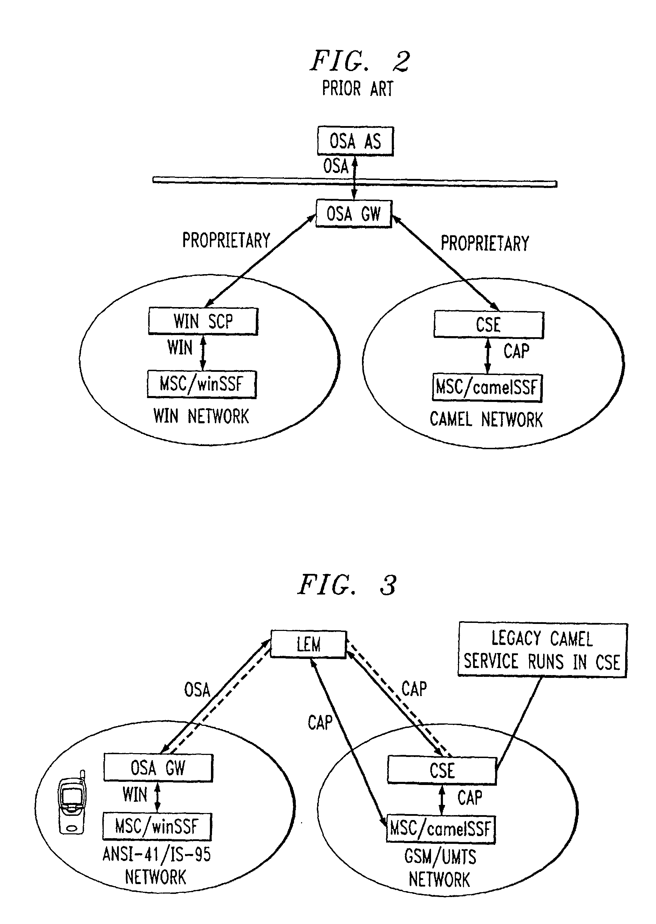

A known Open Service Access client application running on an Open Service Access Application Server (OSA AS) is shown in Figure 2 . The Open Service Access Gateway (OSA GW) has proprietary interfaces towards a CAMEL Service Environment (CSE), or CAMEL Service Control Point, and a WIN Service Control Point, as described in Third Generation Partnership Project Technical Specification 23.127. Using this architecture, newly developed Open Service Access client applications can be deployed in both a WIN based 3G network, as well as in a CAMEL based 3G network.

Known approaches to WIN/CAMEL interworking have relied on introducing a dedicated protocol converter between the mobile switching centre (MSC) in the GSM/UMTS network and the WIN platform and a protocol converter between the mobile switching centre (MSC) in the ASNI41/IS-95 network and the CSE. This is a complex and unwieldy approach.

### Summary of the Invention

The present invention provides an interface (LEM) operative to provide a CAMEL based service to a subscriber terminal in a WIN network by causing the CAMEL based service to appear to the WIN network as an Application in accordance with the Open Service Access (OSA) standard, the interface comprising an Open Service Access (OSA) interface to an Open Service Access gateway (OSA GW) of the WIN network, and operative to convert received Open Service Access (OSA) messages to CAMEL Application Protocol Messages.

Advantages of the present invention in its preferred embodiments are that a mechanism is provided for supporting legacy CAMEL Service Environment (CSE) based services in an IS-41 WIN based network. This achieves the aim of allowing CAMEL based services to be applied to network that only supports WIN. It is considerably cheaper than developing a 'legacy' protocol interface on the Call State Control Function (CSCF). Also, the approach serves as an overlay solution over standardized WIN and CAMEL core networks, i.e. there is no impact on the existing entities in the WIN and CAMEL networks. Also the Legacy Envelope Module approach is fully 3GPP/Parlay standards compliant.

Preferably CAMEL-based subscriber information is mapped to the WIN network, the interface acting as a WIN home location register (HLR).

Preferably the interface is operative to pass the subscriber information by relating an Open Service Access (OSA) getNotification operation to a WIN registration modification (REGNOT) operation.

Preferably upon a service request being made in respect of the subscriber terminal, a received Open Service Access (OSA) reportNotification is converted to a CAMEL Application Protocol Initial Detection Point.

The present invention also provides a mobile telecommunications system comprising a WIN network, an interface and a subscriber terminal, the subscriber terminal being a CAMEL subscriber terminal which has roamed into the WIN network, the interface comprising an Open Service Access (OSA) interface to an Open Service Access gateway (OSA GW) of the WIN network, and operative to convert received Open Service Access (OSA) messages to CAMEL Application Protocol Messages.

The present invention also provides a method of providing a CAMEL based service to a subscriber terminal in a WIN network comprising providing an interface (LEM) causing the CAMEL based service to appear to the WIN network as an Application in accordance with the Open Service Access (OSA) standard. the interface comprising an OSA interface to an OSA gateway of the WIN network, the interface (LEM) converting received OSA messages to CAMEL Application Protocol Messages.

The present invention also provides an interface (LEM) operative to provide a WIN based service to a subscriber terminal in a CAMEL network by causing the WIN based service to appear to the CAMEL network as a CAMEL application (CAP), the interface comprising a WIN interface to a WIN platform of the WIN network, and operative to translate CAMEL Application Protocol messages to the WIN platform.

The present invention also provides a method of providing a WIN based service to a subscriber terminal in a CAMEL network comprising providing an interface (LEM) causing the WIN based service to appear to the CAMEL network as a CAMEL application (CAP).

### Brief Description of the Drawings

A preferred embodiment of the present invention will now be described by way of example and with reference to the drawings, in which:
Figure 1 is a diagrammatic illustration of Open Service Access architecture (prior art),
Figure 2 is a diagrammatic illustration of Open Service Access Application deployed in both WIN and CAMEL network (prior art),
Figure 3 is a diagrammatic illustration of Legacy CAMEL Service Environment Services delivered to a CAMEL subscriber roaming in a WIN (ANSI41/IS95)network,
Figure 4 is a diagrammatic illustration of how a Trigger profile is set up for service provisioning to the CAMEL subscriber shown in Figure 3,
Figure 5 is a diagrammatic illustration of CAMEL Service Environment Service invocation in a WIN network, and
Figure 6 is a diagrammatic illustration of service delivered to a WIN subscriber roaming in a CAMEL network.

### Detailed Description

### CAMEL subscriber in a WIN network

Referring back to Figure 1 which showed how new applications could be deployed in both WIN and CAMEL networks using the Open Service Access (OSA), the question arises how can an existing i.e. legacy CAMEL Service Environment based (CSE) application be deployed in a WIN network? This question is relevant to network operators operating both types of networks, while looking for reuse of existing service logic for economic reasons. The question is also applicable to CAMEL subscribers roaming into a WIN network where they would still wish to have their CAMEL based Operator Specific Services 's at their disposal.

Figure 3 shows a preferred system architecture whereby a GSM/UMTS subscriber roaming in an ANSI41/IS 95 network (with appropriate terminal) can have access to his/her CAMEL services. In the UMTS/GSM network, the Legacy Envelope Module LEM has a CAMEL Application Protocol interface to the CAMEL Service Environment as well as to the Mobile Switching Centres (MSCs) in the network. From the CSE perspective, the Legacy Envelope Module LEM acts as a switching platform (ie an MSC), while from the MSC perspective, the Legacy Envelope Module LEM acts as a service logic running on the equivalent of a CSE.

In the ANSI41/IS95 network, the Legacy Envelope Module LEM has an Open Service Access (OSA) interface to the OSA gateway (GW). The OSA gateway (and hence the underlying network) see the Legacy Envelope Module LEM as an application platform providing a particular service. The Legacy Envelope Module LEM accepts Open Service Access (OSA) requests from the ANS1-41/IS95 network through the WIN interface. It then converts the Open Service Access (OSA) messages to CAMEL Application Protocol messages and sends them to the CSE that it associated with the subscriber. The CSE receives the service request in the same manner as it would if it had received the request from an mobile switching centre MSC in a GSM or UMTS network. It processes the request as a normal service invocation. The CAMEL Service Environment (CSE) is unchanged (indeed unaware) of this signalling conversion.

This conversion is achieved without dedicated WIN/CAMEL inter working function. A subscriber's CAMEL services reside and are executed on a per call basis in the CSE of the home network (this is always the case with CAMEL). In the normal case, the roamed to network needs to support the same version of CAMEL. The Legacy Envelope Module LEM was originally proposed as a mechanism to allow subscribers in the IP Multimedia Subsystem (IMS) to have access to CAMEL based services. Specifically as an emulator causing legacy services to appear to be Application Programming Interface (API) based. The scope of the Legacy Envelope Module LEM is now extended to allow WIN/CAMEL interworking.

The approach proposed is that WIN/CAMEL inter-working is introduced with Open Service Access (OSA) as being the common medium. There is thus no dedicated function that maps WIN to mobile application part (MAP) (and vice versa). As operators will most likely deploy an Open Service Access (OSA) gateway in WIN networks, the Legacy Envelope Module LEM can be considered an enhanced version GSM/UMTS Open Service Access (OSA) advantageously re-using infrastructure.

This mechanism for supporting legacy CAMEL Service Environment (CSE) based services in an IS-41 WIN based network will now be described in more detail.

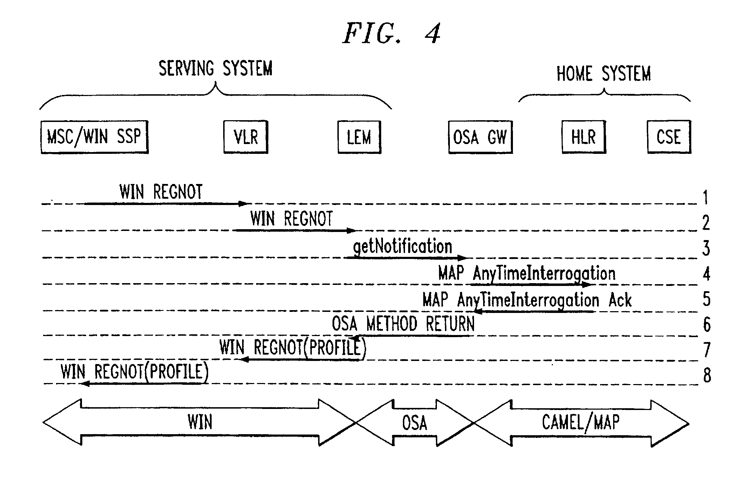

As shown in Figure 4, the calling party is a CAMEL subscriber, roaming in a WIN network, whose CAMEL trigger profile information is sent to its serving WIN system upon registration. The trigger profile is a collection of information held on a per-subcriber basis which indicates when value-added services are to be activated. If an incoming or outgoing call matches the trigger profile then a service is invoked, i.e. the "trigger" is "fired". As explained in more detail below the CAMEL trigger information is carried to the WIN domain using the Open Service Access method invocation getNotification. The Legacy Envelope Module LEM performs a mapping from an Open Service Access getNotification operation to the trigger profile in the WIN REGNOT protocol operation, where REGNOT is the registration notification message used in WIN to report the location of the subscriber and optionally to obtain and validate trigger information for that subscriber. This profile will cause a WIN trigger to be armed in the WIN Originating-Basic Call State Model (O-BCSM). This trigger causes the MSC/WIN Service Switching Function (SSF) to launch a WIN query (ORREQ) during call setup [WIN Interim Standard IS-771].

Referring to the numbered steps shown in Figure 4, the messaging sequence is as follows:
1. The CAMEL subscriber roams into a WIN network and registers with the serving mobile switching centre (MSC). The serving WIN Service Switching Function will attempt to retrieve the subscribers WIN trigger profile by sending a WIN REGNOT operation to the visitor location register (VLR). This is normal behavior as specified in the WIN standard [WIN Interim Standard IS-771].
2. The visitor location register (VLR) will forward the WIN REGNOT operation to the Legacy Envelope Module (in normal operation the REGNOT is sent to the home location register (HLR) of the served subscriber). So the Legacy Envelope Module will act as a WIN home location register (HLR) towards the WIN visitor location register (VLR) on behalf of the CAMEL subscriber.
3. The Legacy Envelope Module will map the WIN REGNOT to an Open Service Access getNotification method invocation. The semantics of the getNotification method are to retrieve the trigger profile information for the subscriber. To the Open Service Access Gateway, the Legacy Envelope Module will act as an Open Service Access Application Server.
4. The Open Service Access Gateway will map the getNotification to the mobile application part (MAP) AnyTimeInterrogation to the home location register (HLR). This is normal behavior as specified in [3GPP Technical Specification TS 29.198 & 3GPP Technical Report TR 29.998].
5. The home location register (HLR) will return the trigger profile in the mobile application part (MAP) AnyTimeInterrogation acknowledgement operation. This is normal behaviour as specified in the mobile application part (MAP) specification [3G Technical Specification TS 29.002].
6. The trigger profile returned in the ack to the AnyTimeInterrogation is carried in the out parameter for the Open Service Access method return of getNotification.
7. The Legacy Envelope Module will map the getNotification to the WIN regnot, which carries the trigger profile to the visitor location register (VLR). The WIN visitor location register (VLR) will think it received the regnot, carrying the trigger profile, from the WIN home location register (HLR) of the served subscriber. The WIN visitor location register (VLR) will assume this is an ordinary WIN trigger profile, rather than a CAMEL trigger profile that is translated into a WIN trigger profile via Open Service Access (OSA).
8. The visitor location register (VLR) will then forward the trigger profile in a WIN regnot to the serving MSC/WIN Service Switching Function.

Note that there are at present no WIN protocol mapping recommendations in 3GPP Technical Report TR 29.998, but this is in line with the behaviour for CAMEL. As far as the Open Service Access Gateway in the home network is concerned, it sees no difference whether it was talking to an Open Service Access Application Server or the Legacy Envelope Module . As far as the WIN visitor location register (VLR) is concerned, it sees no difference whether it was talking to a WIN home location register (HLR) or the Legacy Envelope Module.

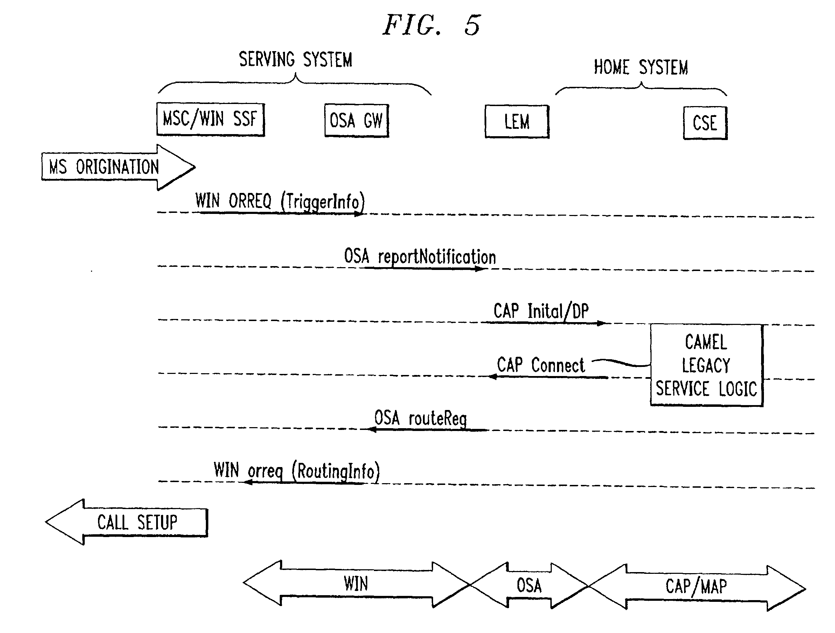

Referring to Figure 5, the messaging sequence in invoking a service is as follows:
1. A mobile originated call attempt by the CAMEL subscriber roaming in a WIN network will cause the MSC/WIN Service Switching Function to launch a WIN query (ORREQ) during call setup [WIN Interim Standard IS-771]. The WIN trigger will fire, since there is a WIN trigger profile loaded according to the scenario described in 3GPP Technical Specification Technical Specification TS 29.198 and 3GPP Technical Report TR 29.998. The WIN ORREQ will be sent to the Open Service Access Gateway in the visited WIN network. Similar behaviour is described in the Open Service Access specifications [3G Technical Specification TS 29.198 & 3G Technical Report TR 29.998]. Again, no WIN protocol mapping recommendations exist, but these would be expected to be very similar and analogous to the CAMEL mappings.
2. The Open Service Access Gateway will map the WIN ORREQ to the Open Service Access reportNotification method invocation, very much like it would map the CAMEL Application Protocol Initial Detection Point to a reportNotification [3G Technical Report TR 29.998]. The Open Service Access reportNotification will be invoked on the Legacy Envelope Module, as if it were an Open Service Access Application Server.
3. The Legacy Envelope Module will map the Open Service Access reportNotification to the CAMEL Application Protocol Initial Detection Point, which will be sent to the CSE. For the CAMEL Service Environment it will appear as if the CAMEL Application Protocol Initial was received from an ordinary CAMEL Application Protocol Service Switching Function. The CAMEL Service Environment will perform its legacy CAMEL Service Environment service logic, which in this example consists of a number translation application. As a result, the CAMEL Service Environment will send a CAMEL Application Protocol Connect with the new routing information to the Legacy Envelope Module, as if it were the CAMEL Application Protocol Service Switching Function.
4. The Legacy Envelope Module will map the CAMEL Application Protocol Connect to an Open Service Access routeReq method invocation to the Open Service Access Gateway.
5. The Open Service Access Gateway will map the Open Service Access routeReq method to the WIN orreq protocol operation, similar to the mapping recommendations described in [3G Technical Report TR 29.998]. The WIN orreq will carry the routing information as it was determined by the legacy CAMEL service logic on the CSE.

As far as the CAMEL Service Environment in the home network is concerned, it sees no difference whether it was talking to a CAMEL Service Switching Function (SSF) or the Legacy Envelope Module . As far as the Open Service Access Gateway in the visited network is concerned, it sees no difference whether it was talking to an Open Service Access Application Server or the Legacy Envelope Module.

### WIN subscriber in a CAMEL network

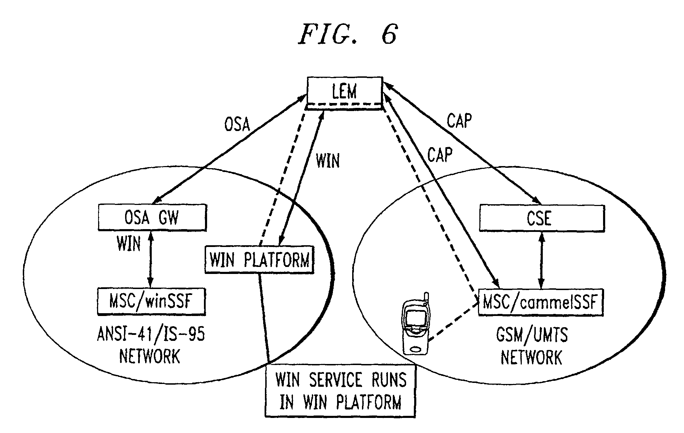

The principle can be extended to allow ANSI-41/IS-95 subscribers who roam into a GSM/UMTS network (with the appropriate terminal) and have access to their WIN based services. This is shown in Figure 6. In the ANSI-41/IS-95 network, the LEM has a WIN interface to a WIN platform. The WIN platform "sees" the LEM acting as a switching platform. The LEM has a CAMEL Application protocol (CAP) interface to the Mobile Switching Centres (MSCs) in the GSM/UMTS network as far as these MSCs are concerned, the LEM acts as a CAMEL based service platform. However, the LEM provides the necessary translations between the GSM/UMTS MSCs and the WIN platform. The WIN platform is thus unaware that it is providing a service through a GSM/UMTS network.

Also, many US operators are deploying GSM networks but still have WIN services that they could use. This proposal would also allow such operators to make continued provision of WIN services to GSM subscribers.

### Similarities between CAMEL and WIN

Intelligent network capabilities are all those functional capabilities which support creation and execution of service logic programs which reside outside of switching equipment, but work in collaboration with the switching equipment based upon a common definition of call models and protocols [WIN Interim Standard IS-771]. The call model provides a high-level abstraction of a call that occurs in the network. This abstraction provides an observable view of the call in the Service Switching Function to the service capability feature (SCF), enabling the service capability feature (SCF) to interact with the Service Switching Function for execution of service logic. Both WIN and CAMEL define their own call models, but both are based on the International Telecommunications Union-Telecommunications Sector - Intelligent Networks call models defined in the ITU-T recommendation Q.1224. This section shows that the call models of WIN and CAMEL are sufficiently similar for the support of CAMEL services in a WIN network and vice versa. Only the Originating Basic Call State Models (O-BCSM) of the half call model are considered here. The O-BCSM for WIN is described in [WIN Interim Standards IS-771, IS-826, and IS-848] whereas the O-BCSM for CAMEL is described in [3G Technical Specification TS 23.078].

CAMEL defines the following Detection Points associated with triggers:
- Analysed_Information
- Route_Select_Failure
- O_Busy
- O_No_Answer
- O_Answer
- O_Disconnect
- O_Abandon

CAMEL defines the following Points in Call (PIC):
- O_Null & Authorise_Origination_Attempt_Collect_Info
- Analyse_Information
- Routing & Alerting
- O_Active
- O_Exception

WIN defines the following Detection Points associated with triggers:
- Origination_Attempt_Authorized
- Collected_Information
- Analyzed_Information
- O_Called_Party_Busy
- O_No_Answer
- O_Answer
- O_Disconnect

WIN defines the following Point in Calls:
- O_Null
- Authorize_Origination_Attempt
- Collect_Information
- Analyze_Information
- Select_Route
- Authorize_Call_Setup
- Send_Call
- O_Alerting
- O_Active
- O_Suspended
- O_Exception

The CAMEL Originating- Basic Call State Model is derived from Q-1224 by collapsing the Points in Call for which no Detection Points (DPs) are defined. The WIN Originating- Basic Call State Model O-BCSM is derived from Q.1224 by not defining triggers for every possible Detection Point. That means that although no one-to-one mapping is obvious from the two Originating- Basic Call State Models, taking these modeling derivations into account we can identify the following common Points in Call and Detection Points:
- Analyzed_Information
- O_Called_Party_Busy
- O_No_Answer
- O_Answer
- O_Disconnect

- O_Null & Authorize_Origination_Attempt & Collect_Information
- Analyze_Information
- Routing & Alerting (Select_Route, Authorize_Call_Setup, Send_Call, O_Alerting)
- O_Active
- O_Exception

All CAMEL Points in Call are also supported by WIN, but CAMEL does not support all WIN Points In Call. Apart from Route_Select_Failure and O_Abandon, all CAMEL Detection Points are supported.

This analysis shows that most of the common CAMEL services, using the Originating- Basic Call State Model, can be supported. These include Number Translation

### OSA Support for the CAMEL/WIN Subset of Points in Call and Detection Points

The previous section identified the commonalities between the call models of WIN and CAMEL. This section explores to what extend these models can be supported by the Open Service Access Application Programming Interface. We look at the support from event notification for the Detection Points only.
- Analyzed_Information P_EVENT_GCCS_ADDRESS_ANALYSED_EVENT
- O_Called_Party_Busy P_CALL_REPORT_BUSY
- O_No_Answer P_CALL_REPORT_NO_ANSWER
- O_Answer P_CALL_REPORT_ANSWER
- O_Disconnect P_CALL_REPORT_DISCONNECT

This analysis shows that all event names at least can be transported across the Open Service Access Application Programming Interface.

### Some Points about Open Service Access Support

Open Service Access (OSA) only provides support for address ranges as trigger criteria, whereas WIN trigger criteria includes e.g. Calling Party Information, Bearer Capability, and Class of Service. This is an inherent limitation of the Open Service Access Application Programming Interface and is not specific to this proposed Legacy Envelope Module approach.

Of course as two protocol mappings are involved, e.g. from WIN to Open Service Access and from Open Service Access to CAMEL Application Protocol, with each mapping some level of detail may to be lost, as one-to-one mappings are not likely to be possible. Furthermore, each mapping stage introduces some processing delay. In this approach the processing delay is doubled in comparison with a straightforward Open Service Access approach.

## Claims

1. An interface (LEM) operative to provide a CAMEL based service to a subscriber terminal in a WIN network by causing the CAMEL based service to appear to the WIN network as an Application in accordance with the Open Service Access (OSA) standard, the interface comprising an Open Service Access (OSA) interface to an Open Service Access gateway (OSA GW) of the WIN network, and operative to convert received Open Service Access (OSA) messages to CAMEL Application Protocol Messages.

2. An interface (LEM) according to claim I in which CAMEL-based subscriber information is mapped to the WIN network, the interface acting as a WIN home location register (HLR).

3. An interface (LEM) according to claim 2 in which the interface is operative to pass the subscriber information by relating an Open Service Access (OSA) getNotification operation to a WIN registration notification (REGNOT) operation.

4. An interface (LEM) according to any preceding claim in which upon a service request being made in respect of the subscriber terminal, a received Open Service Access (OSA) reportNotification is converted to a CAMEL Application Protocol Initial Detection Point.

5. A mobile telecommunications system comprising a WIN network, an interface and a subscriber terminal, the subscriber terminal being a CAMEL subscriber terminal which has roamed into the WIN network, the interface comprising an Open Service Access (OSA) interface to an Open Service Access gateway (OSA GW) of the WIN network, and operative to convert received Open Service Access (OSA) messages to CAMEL Application Protocol Messages.

6. A method of providing a CAMEL based service to a subscriber terminal in a WIN network comprising providing an interface (LEM) causing the CAMEL based service to appear to the WIN network as an Application in accordance with the Open Service Access (OSA) standard, the interface comprising an OSA interface to an OSA gateway of the WIN network, the interface (LEM) converting received OSA messages to CAMEL Application Protocol Messages.

7. An interface (LEM) operative to provide a WIN based service to a subscriber terminal in a CAMEL network by causing the WIN based service to appear to the CAMEL network as a CAMEL application (CAP), the interface comprising a WIN interface to a WIN platform of the WIN network, and operative to translate CAMEL Application Protocol messages to the WIN platform.

8. A method of providing a WIN based service to a subscriber terminal in a CAMEL network comprising providing an interface (LEM) causing the WIN based service to appear to the CAMEL network as a CAMEL application (CAP), the interface comprising a WIN interface to a WIN platform of the WIN network, the interface (LEM) translating CAMEL Application Protocol messages to the WIN platform.

## Patentansprüche

1. Schnittstelle (LEM) zur Bereitstellung eines auf CAMEL basierenden Dienstes für ein Teilnehmerendgerät in einem WIN-Netzwerk durch Bewirken, daß der auf CAMEL basierende Dienst dem WIN-Netzwerk als eine Anwendung gemäß dem Standard Open Service Access (OSA) erscheint, wobei die Schnittstelle eine Schnittstelle des Open Service Access (OSA) zu einem Gateway des Open Service Access (OSA GW) des WIN-Netzwerks umfaßt und empfangene Nachrichten des Open Service Access (OSA) in CAMEL-Anwendungsprotokollnachrichten konvertiert.

2. Schnittstelle (LEM) nach Anspruch 1, bei der auf CAMEL basierende Teilnehmerinformationen auf das WIN-Netzwerk abgebildet werden, wobei die Schnittstelle als WIN-Heimatregister (HLR) wirkt.

3. Schnittstelle (LEM) nach Anspruch 2, bei der die Schnittstelle Teilnehmerinformationen durch Inbeziehungsetzen einer getNotification-Operation des Open Service Access (OSA) mit einer WIN-Registrationsbenachrichtigung (REGNOT) weiterleitet.

4. Schnittstelle (LEM) nach einem der vorhergehenden Ansprüche, bei der nach einer in bezug auf das Teilnehmerendgerät gestellten Dienstanforderung einer empfangenen reportNotification des Open Service Access (OSA) in einen Initial Detection Point des CAMEL-Anwendungsprotokolls konvertiert wird.

5. Mobiltelekommunikationssystem, das ein WIN-Netzwerk, eine Schnittstelle und ein Teilnehmerendgerät umfaßt, wobei das Teilnehmerendgerät ein CAMEL-Teilnehmerendgerät ist, das sich in das WIN-Netzwerk bewegt hat, wobei die Schnittstelle eine Schnittstelle des Open Service Access (OSA) zu einem Gateway des Open Service Access (OSA GW) des WIN-Netzwerks umfaßt und empfangene Nachrichten des Open Service Access (OSA) in CAMEL-Anwendungsprotokollnachrichten konvertiert.

6. Verfahren zur Bereitstellung eines auf CAMEL basierenden Dienstes für ein Teilnehmerendgerät in einem WIN-Netzwerk, bei dem eine Schnittstelle (LEM) bereitgestellt wird, die bewirkt, daß der auf CAMEL basierende Dienst dem WIN-Netzwerk als eine Anwendung gemäß dem Standard Open Service Access (OSA) erscheint, wobei die Schnittstelle eine Schnittstelle des Open Service Access (OSA) zu einem Gateway des Open Service Access (OSA GW) des WIN-Netzwerks umfaßt und empfangene Nachrichten des Open Service Access (OSA) in CAMEL-Anwendungsprotokollnachrichten konvertiert.

7. Schnittstelle (LEM), die einem Teilnehmerendgerät in einem CAMEL-Netzwerk einen auf WIN basierenden Dienst bereitstellt, indem bewirkt wird, daß der auf WIN basierende Dienst dem CAMEL-Netzwerk als eine CAMEL-Anwendung (CAP) erscheint, wobei die Schnittstelle eine WIN-Schnittstelle zu einer WIN-Plattform des WIN-Netzwerks umfaßt und CAMEL-Anwendungsprotokollnachrichten in die WIN-Plattform übersetzt.

8. Verfahren zur Bereitstellung eines auf WIN basierenden Dienstes für ein Teilnehmerendgerät in einem CAMEL-Netzwerk, bei dem eine Schnittstelle (LEM) bereitgestellt wird, die bewirkt, daß der auf WIN basierende Dienst dem CAMEL-Netzwerk als eine CAMEL-Anwendung (CAP) erscheint, wobei die Schnittstelle eine WIN-Schnittstelle zu einer WIN-Plattform des WIN-Netzwerks umfaßt und CAMEL-Anwendungsprotokollnachrichten in die WIN-Plattform übersetzt.

## Revendications

1. Interface (LEM) servant à fournir un service basé sur CAMEL à un terminal d'abonné dans un réseau WIN en faisant en sorte que le service basé sur CAMEL apparaisse au réseau WIN comme une Application conformément au standard Open Service Access (OSA - Accès ouvert au Service), l'interface comprenant une interface Open Service Access (OSA) avec une passerelle Open Service Access (OSA GW) du réseau WIN, et servant à convertir des messages Open Service Access (OSA) reçus en Messages de Protocole d'Application CAMEL.

2. Interface (LEM) selon la revendication 1, dans laquelle des informations d'abonné basées sur CAMEL sont mises en correspondance avec le réseau WIN, l'interface servant d'enregistreur de position de rattachement (HLR) WIN.

3. Interface (LEM) selon la revendication 2, dans laquelle l'interface sert à passer les informations d'abonné en liant une opération getNotification (obtenir Avis) Open Service Access (OSA) à une opération d'avis d'enregistrement (REGNOT) WIN.

4. Interface (LEM) selon l'une quelconque des revendications précédentes, dans laquelle dès une demande de service effectuée relativement au terminal d'abonné, un reportNotification (signaler Avis) Open Service Access (OSA) reçu est converti en un Point de Détection initial de Protocole d'Application CAMEL.

5. Système de télécommunications mobiles comprenant un réseau WIN, une interface et un terminal d'abonné, le terminal d'abonné étant un terminal d'abonné CAMEL qui a itinéré jusque dans le réseau WIN, l'interface comprenant une interface Open Service Access (OSA) avec une passerelle Open Service Access (OSA GW) du réseau WIN, et servant à convertir des messages Open Service Access (OSA) reçus en Messages de Protocole d'Application CAMEL.

6. Procédé de fourniture d'un service basé sur CAMEL à un terminal d'abonné dans un réseau WIN comprenant la fourniture d'une interface (LEM) faisant en sorte que le service basé sur CAMEL apparaisse au réseau WIN comme une Application conformément au standard Open Service Access (OSA - Accès ouvert au Service), l'interface comprenant une interface OSA avec une passerelle OSA du réseau WIN, l'interface (LEM) convertissant des messages OSA reçus en Messages de Protocole d'Application CAMEL.

7. Interface (LEM) servant à fournir un service basé sur WIN à un terminal d'abonné dans un réseau CAMEL en faisant en sorte que le service basé sur WIN apparaisse au réseau CAMEL comme une application CAMEL (CAP), l'interface comprenant une interface WIN avec une plate-forme WIN du réseau WIN, et servant à translater des messages de Protocole d'Application CAMEL jusqu'à la plate-forme WIN.

8. Procédé de fourniture d'un service basé sur WIN à un terminal d'abonné dans un réseau CAMEL comprenant la fourniture d'une interface (LEM) faisant en sorte que le service basé sur WIN apparaisse au réseau CAMEL comme une application CAMEL (CAP), l'interface comprenant une interface WIN avec une plate-forme WIN du réseau WIN, l'interface (LEM) translatant des messages de Protocole d'Application CAMEL jusqu'à la plate-forme WIN.
